# EUROPÄISCHE PATENTSCHRIFT

(11) **EP 2 131 171 B1**
(45) Veröffentlichungstag und Bekanntmachung des Hinweises auf die Patenterteilung: **29.12.2010**
(21) Anmeldenummer: 09161459.4
(22) Anmeldetag: 29.05.2009
(51) Int. Cl.: G01L 23/10, G01M 15/10, G01L 23/08

(54) **Messeinrichtung**
Measurement device
Dispositif de mesure

(30) Priorität: 06.06.2008 AT 9222008
(43) Veröffentlichungstag der Anmeldung: 09.12.2009
(73) Patentinhaber: AVL List GmbH, 8020 Graz (AT)
(72) Erfinder: Winklhofer, Ernst, 8565, ST. JOHANN OB HOHENBURG (AT); Friedl, Alexander, 8045, GRAZ (AT)
(74) Vertreter: Babeluk, Michael

(56) Entgegenhaltungen:
- EP-A- 1 089 062
- EP-A- 1 460 400
- DE-A1- 3 912 177
- JP-A- 61 055 312
- US-A- 5 714 680

## Beschreibung

Die Erfindung betrifft eine Messeinrichtung zur Erfassung von Vorgängen im Brennraum einer Brennkraftmaschine, mit einem Druckaufnehmer, welcher dazu ausgebildet ist, in eine in einen Brennraum mündende Bohrung der Brennkraftmaschine eingesetzt zu werden, wobei der Druckaufnehmer zumindest einen optisch in den Brennraum mündenden Lichtleiter aufweist, und wobei vorzugsweise im Mündungsbereich in den Brennraum ein optisches Einkoppelelement angeordnet ist.

Insbesondere zur Überwachung von Verbrennungsvorgängen im Brennraum einer Brennkraftmaschine ist eine gleichzeitige optische Messung und eine Druckmessung unumgänglich, um Brennvorgänge in Echtzeit überwachen zu können. Aufgrund der kompakten Anordnung der Gaswechselventile, der Einspritzeinrichtungen und der Zündkerzen ist es aber zunehmend schwierig, zusätzliche Bohrungen für die optische Überwachung des Brennraumes und die Drucküberwachung des Brennraumes im Zylinderkopf anzuordnen. Daher ist es wünschenswert, die Zahl von Messbohrungen so gering wie möglich zu halten. Eine Möglichkeit diese zusätzlichen Bohrungen zu vermeiden besteht darin, in eine Zündkerze eine zusätzliche Messfunktion zu adaptieren.

Aus der AT 503.067 A1 ist eine Zündkerze mit einer integrierten Druckmesseinrichtung und einer optischen Messeinrichtung bekannt. Dabei weist das Gehäuse der Zündkerze eine erste Bohrung zur Aufnahme der Druckmesseinrichtung und eine zweite Bohrung zur Aufnahme eines in einen Brennraum mündenden Lichtleiters auf.

Weiters ist aus der AT 407.577 B eine Zündkerze mit einer durchgehenden, außermittig im Gehäuse ausgebildeten Längsbohrung zur Aufnahme eines Isolators bekannt. Die Zündkerze weist Gehäusebereiche unterschiedlicher Wandstärke auf, wobei in einem Bereich größerer Wandstärke eine Druckmesseinrichtung angeordnet ist. Die Bohrung zur Aufnahme der Druckmesseinrichtung ist geneigt im Bezug auf die Längsbohrung ausgebildet.

Aus der AT 002.228 U1 ist eine Zündkerze für Brennkraftmaschinen bekannt, welche einen in die Zündkerze integrierten optischen Sensor mit mehreren in den Brennraum mündende Lichtleiter aufweist. Die Lichtleiter sind dabei konzentrisch um die Achse der Mittelelektrode angeordnet. Jeweils eine Gruppe von parallel zur Achse der Zündkerze verlaufende Bohrung mündet in eine als Sackloch ausgebildete Sammelbohrung ein. Die optische Verbindung wird über Lichtleiterkabel und den in den Brennraum über die Sammelbohrung und die Bohrungen mündenden Lichtleitern hergestellt.

Die AT 003.845 U1 beschreibt eine optoelektronische Messeinrichtung zur Erfassung von Verbrennungsvorgängen im Brennraum einer im Betrieb befindlichen Brennkraftmaschine, wobei optische Sensoren in einem im Wesentlichen zylindrischen in den Brennraum mündenden Bauteil und die Sensoreneden im Wesentlichen radial im Mantel des Bauteils angeordnet sind. Der Bauteil kann beispielsweise eine Zündkerze sein.

Weiters ist aus der AT 402.116 B eine Zündkerze mit einem Kraftmesselement zur Messung des an der Zündkerze anliegenden Druckes bekannt, wobei der Isolierkörper der Zündkerze bei Druckbeaufschlagung in axialer Richtung unter Zwischenlage des Kraftmesselementes sich am Kerzengehäuse abstützt. Weitere Zündkerzen mit optischen Sensoren sind aus den Veröffentlichungen WO 2006/037251 A1, US 4,452,672 A, DE 86 14 081 U1 und DE 30 01 711 A1 bekannt. Die DE 10 2005 060 139 A1 beschreibt eine Zündkerze mit integriertem Drucksensor.

Bei Zündkerzen mit integrierten optischen und Drucksensoren handelt es sich um kostenintensive Spezialanfertigungen. Insbesondere für Serienmotoren sind derartige Zündkerzen nicht geeignet, da die Zündkerze als verschleißbehafteter Bauteil - unabhängig von optischen Sensoren und Drucksensoren - zu wechseln sein sollte. Darüber hinaus ist es wünschenswert, auch bei zündkerzenlosen Brennkraftmaschinen eine gleichzeitige optische Messung und Druckmessung durchführen zu können.

Üblicherweise werden zur Druckmessung temperaturunempfindliche Druckaufnehmer mit geringer Baugröße eingesetzt, beispielsweise piezoelektrische oder piezoresistente Drucksensoren, wobei die Druckaufnehmer in Bohrungen geringen Durchmessers in den Zylinderkopf eingesetzt werden. Die sehr kleinen Bohrungen von beispielsweise 5 mm zur Aufnahme von Drucksensoren standen bisher einer Kombination mit optischen Sensoren entgegen.

Piezoelektrische Druckaufnehmer zur Messung des Druckes im Brennraum bei Brennkraftmaschinen sind beispielsweise aus den Veröffentlichungen GB 752 851 A, DE 25 44 505 A1, DE 19 00 970 A1 oder DE 39 12 177 A1 bekannt. Ein fiberoptischer Drucksensor wird durch die EP 10 89 062 A1 offenbart. Mangels eines in den Brennraum mündenden Lichtleiters ist eine visuelle Beobachtung von Vorgängen im Brennraum nicht möglich.

Die AT 002 114 U1 zeigt eine Brennkraftmaschine mit in der Zylinderkopfdichtung angeordneten Lichtleitern zur Brennraumbeobachtung.

Eine weitere Messeinrichtung zur Erfassung von Vorgängen im Brennraum einer Brennkraftmaschine mit einem Druckaufnehmer ist aus EP1460400 bekannt.

Aufgabe der Erfindung ist es, eine Messeinrichtung zu schaffen, welche bei einer Brennkraftmaschine eine von der Zündkerze unabhängige gleichzeitige optische Messung und Druckmessung auf kleinstem Raum ermöglicht.

Erfindungsgemäß wird dies dadurch erreicht, dass das optische Einkoppelelement in eine Druckmembran des Druckaufnehmers oder in das Gehäuse des Druckaufnehmers eingelötet ist.

In einer bevorzugten Ausführungsvariante der Erfindung ist dabei vorgesehen, dass das optische Einkoppelelement vom Lichtleiter beabstandet ist. Der Abstand zwischen dem Lichtleiter und dem optischen Einkoppelelement ermöglicht eine unbehinderte Bewegung der Druckmembran. Dadurch, dass das optische Einkoppelelement in der Druckmembran angeordnet ist, kann die Messeinrichtung mit einem äußerst geringen Einbaudurchmesser ausgeführt werden, so dass diese in herkömmliche Druckbohrungen eingesetzt werden kann.

Wird das optische Einkoppelelement in das Gehäuse des Druckaufnehmers eingelötet, so wird der Lichtleiter wird dabei in einem gebohrten optischen Kanal in einem seitlichen Gehäusebereich geführt, wobei der optische Kanal neben der Druckmembran in den Brennraum mündet.

Das optische Einkoppelelement kann als optische Linse oder als Prisma ausgebildet sein. Weiters ist es möglich, die brennraumseitige Oberfläche des optischen Einkoppelelements mit mehreren eben und/oder gekrümmt geformten Flächenelementen auszuführen.

Die Messeinrichtung ist keinesfalls auf ein bestimmtes Messprinzip eingeschränkt. Im Rahmen der Erfindung ist daher vorgesehen, dass der Druckaufnehmer als piezoelektrischer, piezoresistenter, frequenzanaloger, kapazitiver, induktiver oder optischer Drucksensor oder als Drucksensor mit einem Hallelement ausgebildet sein kann.

Die Erfindung wird im Folgenden anhand der Figuren näher erläutert. Es zeigen:
- Fig. 1: eine erfindungsgemäße Messeinrichtung in einer ersten Ausfüh- rungsvariante in einem Längsschnitt,
- Fig. 2: die Messeinrichtung in einem Schnitt gemäß der Linie 11-11 in Fig. 1,
- Fig. 3: die erfindungsgemäße Messeinrichtung in einer zweiten Ausfüh- rungsvariante in einem Längsschnitt und
- Fig. 4: die Messeinrichtung aus Fig. 3 in einem Schnitt gemäß der Linie IV-IV in Fig. 3.

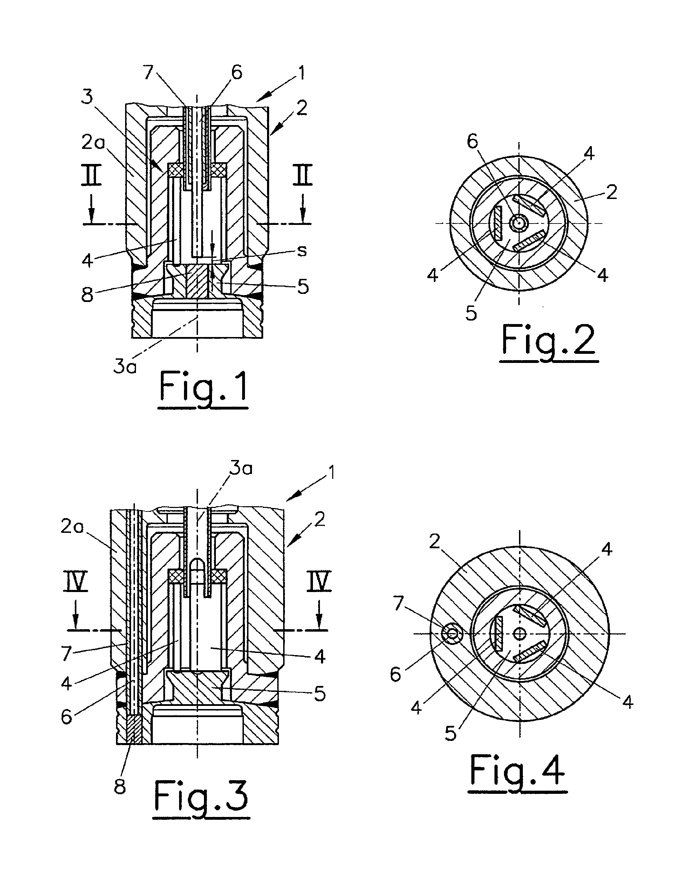

Fig. 1 zeigt eine Messeinrichtung 1 mit einem Druckaufnehmer 3, welcher innerhalb des Gehäuses 2 der Messeinrichtung 1 angeordnet ist. Im Ausführungsbeispiel ist der Druckaufnehmer 3 durch einen piezoelektrischen Drucksensor gebildet, wobei mit Bezugszeichen 4 die Piezoelemente bezeichnet sind. Der Druckaufnehmer 3 weist eine mit den Piezoelementen 4 in Kontakt stehende Druckmembran 5 auf, wobei über die an den nicht weiter dargestellten Brennraum grenzende Druckmembran 5 die Piezoelemente 4 mit einer axialen Kraft beaufschlagt werden.

Der Druckaufnehmer 3 weist in dem in Fig. 1 und Fig. 2 dargestellten Ausführungsbeispiel einen zentral angeordneten Lichtleiter 6 auf, welcher durch eine Schutzkapillare 7 teilweise ummantelt ist. In die Druckmembran 5 ist ein optisches Einkoppelelement 8 eingelötet, um eine optische Verbindung des Lichtleiters 6 mit dem Brennraum zu ermöglichen. Zwischen dem Lichtleiter 6 und dem optischen Einkoppelelement 8 ist dabei ein Luftspalt s vorgesehen, um einen Freigang der Druckmembran 5 gegenüber dem Lichtleiter 6 zu ermöglichen.

Die Fig. 3 und Fig. 4 zeigen ein weiteres Ausführungsbeispiel der Erfindung, wobei der Lichtleiter 6 in die Gehäusewand 2a des Gehäuses 2 eingebettet und gelötet ist und somit von der Achse 3a des Druckaufnehmers 3 beabstandet ist. Im Endbereich des Lichtleiters 6 ist im Bereich der Druckmembran 5 ein optisches Einkoppelelement 8 mit dem Gehäuse 2 bzw. der Membran 5 verlötet, wobei das optische Einkoppelelement 8 den Lichtleiter 6 optisch mit dem Brennraum verbindet. Die Ausführung gemäß den Fig. 3 und Fig. 4 kann insbesondere bei größeren Bohrungsdurchmessern zur Aufnahme der Messeinrichtung 1 zur Anwendung gelangen.

Das optische Einkoppelelement 8 kann durch eine optische Linse oder ein Prisma gebildet sein. Weiters ist es auch möglich, die brennraumseitige Oberfläche des optischen Einkoppelelementes 8 mit mehreren ebenen und/oder gekrümmten Flächenelementen auszuführen.

## Patentansprüche

1. Messeinrichtung (1) zur Erfassung von Vorgängen im Brennraum einer Brennkraftmaschine, mit einem Druckaufnehmer (3), welcher dazu ausgebildet ist, in eine in einen Brennraum mündende Bohrung der Brennkraftmaschine eingesetzt zu werden, wobei der Druckaufnehmer (3) zumindest einen optisch in den Brennraum mündenden Lichtleiter (6) aufweist, und wobei vorzugsweise im Mündungsbereich in den Brennraum ein optisches Einkoppelelement (8) angeordnet ist, **dadurch gekennzeichnet, dass** das optische Einkoppelelement (8) in eine Druckmembran (5) des Druckaufnehmers (3) oder in das Gehäuse (2) des Druckaufnehmers (3) eingelötet ist.

2. Messeinrichtung (1) nach Anspruch 1, **dadurch gekennzeichnet, dass** das optische Einkoppelelement (8) axial vom Lichtleiter (6) beabstandet ist.

3. Messeinrichtung (1) nach Anspruch 1 oder 2, **dadurch gekennzeichnet, dass** das optische Einkoppelelement (8) als Linse ausgebildet ist.

4. Messeinrichtung (1) nach einem der Ansprüche 1 bis 3, **dadurch gekennzeichnet, dass** das optische Einkoppelelement (8) als Prisma ausgebildet ist.

5. Messeinrichtung (1) nach einem der Ansprüche 1 bis 4, **dadurch gekennzeichnet, dass** die brennraumseitige Oberfläche des optischen Einkoppelelements (8) mit mehreren ebenen und/oder gekrümmten Flächenelementen ausgeführt ist.

6. Messeinrichtung (1) nach einem der Ansprüche 1 bis 5, **dadurch gekennzeichnet, dass** der Druckaufnehmer (3) als piezoelektrischer, piezoresistenter, frequenzanaloger, kapazitiver, induktiver oder optischer Drucksensor oder als Drucksensor mit einem Hallelement ausgebildet ist.

## Claims

1. A measuring device (1) for detecting processes in the combustion chamber of an internal combustion engine, comprising a pressure sensor (3) which is arranged to be inserted into a bore hole of the internal combustion engine which opens into a combustion chamber, with the pressure sensor (3) comprising at least one optical light guide (6) optically opening into the combustion chamber, and with an optical injection element (8) being arranged preferably in the opening region into the combustion chamber, **characterised in that** the optical injection element (8) is soldered into a pressure membrane (5) of the pressure sensor (3) or into the housing (2) of the pressure sensor (3).

2. A measuring device (1) according to claim 1, **characterised in that** the optical injection element (8) is axially spaced from the light guide (6).

3. A measuring device (1) according to claim 1 or 2, **characterised in that** the optical injection element (8) is arranged as a lens.

4. A measuring device (1) according to one of the claims 1 to 3, **characterised in that** the optical injection element (8) is arranged as a prism.

5. A measuring device (1) according to one of the claims 1 to 4, **characterised in that** the surface of the optical injection element (8) on the combustion side is arranged with several planar and/or curved surface elements.

6. A measuring device (1) according to one of the claims 1 to 5, **characterised in that** the pressure sensor (3) is arranged as a piezoelectric, piezoresistive, frequency-analog, capacitive, inductive or optical pressure sensor, or as a pressure sensor with a hall element.

## Revendications

1. Installation de mesure (1) pour saisir des opérations se produisant dans la chambre de combustion d'un moteur thermique comportant un capteur de pression (3) réalisé pour être logé dans un perçage du moteur thermique débouchant dans la chambre de combustion,
le capteur de pression (3) ayant au moins un guide de lumière (6) débouchant optiquement dans la chambre de combustion et comportant de préférence un élément de couplage optique (8) dans la zone débouchant dans la chambre de combustion,
**caractérisée en ce que**
l'élément de couplage optique (8) est soudé dans la membrane de pression (5) du capteur de pression (3) ou dans le boîtier (2) du capteur de pression (3).

2. Installation de mesure (1) selon la revendication 1,
**caractérisée en ce que**
l'élément de couplage optique (8) est écarté axialement du guide de lumière (6).

3. Installation de mesure (1) selon la revendication 1 ou 2, **caractérisée en ce que**
l'élément de couplage optique (8) est une lentille.

4. Installation de mesure (1) selon l'une des revendications 1 à 3, **caractérisée en ce que**
l'élément de couplage optique (8) est un prisme.

5. Installation de mesure (1) selon l'une des revendications 1 à 4, **caractérisée en ce que**
la surface côté chambre de combustion de l'élément de couplage optique (8) comporte plusieurs éléments de surface, plans et/ou courbes.

6. Installation de mesure (1) selon l'une des revendications 1 à 5, **caractérisée en ce que**
le capteur de pression (3) est un capteur piézoélectrique, un capteur piézorésistant, un capteur analogique en fréquence, un capteur capacitif, un capteur inductif ou un capteur optique de pression ou encore un capteur de pression avec un élément hall.
